# EUROPEAN PATENT APPLICATION

(11) **EP 4 160 548 A1**
(43) Date of publication of application: **05.04.2023**
(21) Application number: 21306382.9
(22) Date of filing: 01.10.2021
(51) Int. Cl.: G06V 10/24, G06V 10/75, G06V 10/82, G06V 40/16, G06V 40/50

(54) **SYSTEM AND METHOD FOR PROCESSING BIOMETRIC CHARACTERISTICS**

(71) Applicant: Amadeus S.A.S., 06410 Biot (FR)
(72) Inventor: ABRAHAM, Eldho, Thrissur, Kerala (IN); SARANGI, Sanjaya Kumar, Bengaluru, Karnataka (IN)
(74) Representative: Samson & Partner Patentanwälte mbB

(57) **Abstract**

The present invention relates to a system and method for processing the biometric characteristics of users and compensating for the optical distortion introduced in the images by the image capturing devices. Furthermore, the present invention relates to a biometric security system, which is configured to adapt the authentication procedure performed at one or more biometric authentication touchpoints based on a biometric matching score assigned to a biometric ID profile of the user.

## Description

### Field

The present invention relates to a method and a system for processing biometric characteristics of a user, and more in particular to a biometric security system for authenticating users based on their corresponding biometric characteristics.

### Background

Biometric authentication systems, such as facial recognition systems, are widely used at security checkpoints for authenticating the identity of a user. Biometric authentication is based on a comparison between reference biometric characteristics of the user stored in a corresponding biometric ID profile, also referred to as biometric template, and biometric characteristics obtained from one or more verification images of the user captured by an image capturing device at a biometric authentication touchpoint. In general, the biometric characteristics stored in the user biometric ID profile are obtained during a registration procedure, also referred to as the enrolment stage. During the biometric registration, one or more images of the user are captured using an image capturing device. The captured images are processed to extract a set of biometric information, which are associated with the biometric characteristics of the user, e.g. facial biometric features. For example, the user biometric characteristics may be obtained from images captured by the camera of an electronic user device such as a mobile phone during the biometric enrolment procedure. In general, a biometric authentication system may be provided with one or more biometric authentication touchpoints depending on the application. For example, at an airport, several biometric authentication touchpoints may be provided, e.g. airport passport control, boarding gate, access to certain airport areas, and the like. As discussed previously, biometric authentication is based on the matching accuracy between the stored biometric characteristics of the user and the biometric characteristics obtained from images at the biometric authentication touchpoints. However, the biometric matching accuracy may be affected by several factors, such as optical distortion of the image captured during enrolment or at the biometric authentication touchpoint, age, changes in the user appearance and the like. As a result, the biometric authentication accuracy may be negatively impacted, leading to false-positive and/or false-negative authentication of users. For example, face recognition technology leads to the touchless travel concept, and smartphones prove to be a good aid for it. However, there are technical limitations that can cause accuracy issues during the authentication procedure. For example, optical distortion introduced in the captured image of the user by the image capturing device used during enrolment and/or during authentication may lead to false-positive and/or false-negative authentication results. It is known that the quality of the camera lenses of an image capturing device affects the optical distortion introduced in the captured image. As such, if the camera lens of the device used to capture an "enrolled image" of the user during the enrolment process is different from the quality of the camera lens used by the biometric authentication touchpoint to capture "verification images" during the authentication process, may cause accuracy issues during the comparison of the images, which may lead to false positives or negatives. Similarly, changes in the biometric characteristics of the user, e.g. due to ageing, would further affect the authentication procedure.

Therefore, there is a need to improve the biometric authentication of a user and reduce false positives and false negatives.

### Summary

An object of the present invention is to provide a method and a system that overcomes the disadvantages of prior art solutions.

In particular, the present invention provides a method and a system for improving the biometric authentication of users by compensating for the optical distortion introduced in the captured images by the image capturing devices used during enrolment and/or authentication. As a result, the biometric matching accuracy during an authentication procedure is improved, thereby reducing false positive or false negative authentication incidents.

Another object of the present invention is to provide a system and a method to compensate for variations in the biometric characteristics of the user introduced over time by different factors such as ageing and the like. The biometric characteristic variations are compensated by determining a time drifting profile of the biometric characteristics of the user. The time drifting profile of biometric characteristics of the user is generated based on biometric data collected over time from previously captured images. Based on the time drifting profile, it is possible to determine how the biometric characteristics of the user would change over a predetermined time frame. In this way, it is possible to determine an expiration date for the biometric characteristics stored in the biometric profile, indicating an expected date for when the stored biometric characteristics would not be valid due to the low biometric matching accuracy with a live image of the user. The time drifting profile is based on modelling future changes in the biometric characteristics of the user based on historic biometric data.

Another object of the present invention is to provide a biometric security system comprising one or more biometric authentication touchpoints configured to dynamically adapt their corresponding biometric authentication procedure based on a biometric authentication strength assigned to a biometric ID profile of a user presented for authentication during a security check, e.g. at an airport. The biometric authentication strength of the biometric ID profile may be determined based on the biometric matching accuracy between the biometric characteristics obtained at the biometric authentication touchpoint and the biometric characteristics stored in the biometric user ID profile. For example, higher security measures and authentication checks may be required to authenticate the identity of a user at a security checkpoint having biometric matching accuracy being within a threshold range, e.g. the matching accuracy is below or at a certain value. According to embodiments of the present invention, the user may assess the biometric authentication strength of their biometric ID profile before being presented at a biometric authentication touchpoint for authentication. As a result, the user may take the necessary steps to improve the biometric authentication strength of the corresponding user biometric ID profile. For example, the user may update the enrolled biometric characteristics stored in the corresponding biometric user ID profile. The biometric authentication touchpoints may receive in advance information on the biometric authentication strength of biometric ID profiles of users scheduled to be processed at each biometric authentication touchpoint. As such, the biometric authentication touchpoints may select suitable biometric authentication procedures to authenticate users based on the biometric authentication strength of the corresponding biometric ID profile of each user. For example, the biometric authentication touchpoints may be communicatively coupled to the biometric management system and configured to received and/or request the biometric authentication strength of the biometric profiles of users. For example, based on information provided by a user relating to an upcoming trip, the biometric management system may transmit in advance of the user journey the biometric profile of the user and corresponding authentication strength to one or more biometric authentication touchpoints associated with the journey of the user, e.g. airport, hotel, and the like. Accordingly, each biometric authentication touchpoint may adapt its authentication procedure in accordance with the authentication strength of the biometric ID profile of the user, thereby improving the authentication procedure.

The above objects are achieved according to the systems and methods of the independent claims. Preferred embodiments are described in the dependent claims.

### Brief description of the drawings

The following drawings are provided as an example to further explain and describe various aspects of the invention:
Figure 1 shows an example of a biometric security system according to embodiments of the present invention.
Figure 2 shows an example of the different biometric categories that may be considered in determining the biometric matching value according to embodiments of the present invention.
Figure 3 shows an example of the different severity level authentication procedures at a biometric authentication touchpoint.
Figure 4 shows an exemplified process flow for assessing the security strength of a biometric ID according to embodiments of the present invention.
Figure 5 shows an exemplified system for determining the expiration date of a registered biometric ID and/or a biometric matching value.
Figure 6 shows an example of a time drift model according to embodiments of the present invention.
Figure 7 shows an exemplified implementation of a biometric characteristics compensator according to embodiments of the present invention.
Figure 8 shows an exemplified implementation of a rewards system according to embodiments of the present invention.
Figure 9 shows an exemplified implementation of a biometric processing module according to embodiments of the present invention.
Figure 10 shows an example of an optical distortion correction procedure according to embodiments of the present invention.
Figure 11 shows an example of extracting the relative optical distortion by comparing the target image with a reference image according to embodiments of the present invention.
Figure 12 shows an exemplified implementation of an optical distortion correction module according to embodiments of the present invention.
Figure 13 shows an example of extracting the relative optical distortion from parameters obtained from one or more images according to embodiments of the present invention.
Figure 14 shows an example of generating an optical distortion invariant feature estimator according to embodiments of the present invention.
Figure 15 shows an exemplified arrangement for calculating the biometric score of a user biometric profile according to embodiments of the present invention.

### Detailed description

The present invention will be illustrated using the exemplified embodiments shown in the figures, which will be described in more detail below. It should be noted that any references made to dimensions are only indicative and do not restrict the invention in any way. While this invention has been shown and described with reference to certain illustrated embodiments thereof, it will be understood by those skilled in the art that various changes in form and details may be made therein without departing from the scope of the invention encompassed by the appended claims. Furthermore, while the invention has been described with references to a particular system and method for managing the biometric identities (IDs) of the registered user and a biometric security system thereof, it should be understood by those skilled in the art that changes in form and details may be made to facilitate an assessment of the security strength of a biometric ID in advance of its presentation to a biometric authentication touchpoint without departing from the scope of the invention encompassed by the appended claims.

According to an aspect of the present invention, a method for extracting at a biometric management system biometric characteristics of a user from one or more images is provided. The method comprises:
acquiring at least one image of a user captured by an image capturing device;
extracting biometric information associated with the user from the captured images; and
processing the extracted biometric information to determine biometric characteristics of the user, wherein the step of determining the biometric characteristics of the user comprises:
   determining a relative optical distortion introduced in the biometric information extracted from each image by the corresponding image capturing device;
   if an optical distortion is detected, applying a corrective filter to the extracted biometric information to compensate for the detected optical distortion, wherein the corrective filter is selected from a communicatively coupled filter database based on optical distortion information extracted from each image during the processing of the extracted biometric information; and
   extracting the biometric characteristics of the user from the compensated biometric information, or if an optical detection is not detected, from the extracted biometric information.

The optical distortion introduced in the biometric information varies between image capturing devices. As such, when comparing biometric characteristics of a user captured by different image capturing devices with different quality optical lenses, the optical distortion introduced by each image capturing device may lead to a false positive or false negative, thereby compromising the accuracy of the authentication procedure. The method of the present invention facilitates the correction of the optical distortion introduced by the different image capturing devices in the biometric characteristics of a user during an enrolment procedure and/or during an authentication procedure at a biometric authentication touchpoint. The optical correction is performed by applying an optical distortion correction filter, which is selected and, optionally, adapted according to the optical distortion information collected from the images. For example, the optical distortion correction filter may be selected based on the type of optical distortion detected and/or the type of image capturing device used for capturing the image. Once the corrective filter has been applied, the corrected biometric characteristics may be stored in a user biometric ID profile, which is stored in a profile database. The optical distortion characteristics introduced by the different image capturing devices may also be stored in the profile database and associated with the user biometric ID profile. For example, the historical optical distortion information collected from previously captured images captured, e.g. during an enrolment procedure and/or an authentication procedure, may be used to update the corrective filter and its parameters. As a result, continuously updating the corrective filter with historical optical distortion information collected over time during the processing of user images would improve the accuracy of the biometric characteristics stored in the biometric ID profile of the users, thereby increasing the accuracy of an authentication procedure.

According to embodiments of the first aspect, the step of determining the relative optical distortion comprises comparing the at least one image with stored images captured from different image capturing devices. For example, different optical distortion characteristics may be introduced by the different image capturing devices, e.g. at different authentication touchpoints of an airport. The relative optical distortion between images of the same planar surface in space may be determined based on their homography relationship. The corrective filter may be selected based on the relative optical distortion detected by the homography relationship between the images. For example, depending on the type of the optical distortion introduced in the image, e.g. its deviation from a rectilinear projection, a corresponding corrective filter may be selected, or the corrective filter parameters may be adapted so as to correct the detected optical distortion.

According to embodiments of the first aspect, the relative optical distortion is determined between images of the user captured from two image capturing devices. For example, when processing a plurality of images, each captured from a different image capturing device, the relative optical distortion may be determined between each set of two images. The resulting relative optical distortion between two sets of images is then compared until the relative optical distortion for the complete set of images is determined.

According to embodiments of the first aspect, the step of determining the relative optical distortion comprises comparing the extracted biometric characteristics from each image with a reference set of undistorted biometric information associated with the user stored in a biometric ID profile of the user obtained from a profile database of the biometric management system. To further enhance the accuracy of the authentication procedure or as an alternative to the comparison of the images obtained from different capturing devices, the relative optical distortion may be determined based on the comparison of the captured images with an undistorted reference image that may be generated based on optical distortion information collected over time from a plurality of images associated with the corresponding user and or other registered users. In general, as more images of users are processed, it becomes possible to determine the optical image distortion introduced by different types of image capturing devices, thereby enhancing the capabilities of the corrective filter in correcting and/or compensating the distorted image of the biometric characteristics of the user during the authentication procedure and/or during enrolment. In this way, the images of the user compared during authentication are of the same quality, thereby enhancing the authentication procedure.

According to embodiments of the first aspect, the relative optical distortion is determined based on a comparison of stored images of the user captured at different points in time. To compensate for other distortion factors, such as age, the biometric characteristics may be determined and/or enhanced with information obtained from images of the user captured at different points in time, thereby improving the authentication accuracy and reducing the false positives/negatives.

According to embodiments of the first aspect, determining the optical distortion comprises:
identifying a facial expression of the user in each image;
associating, based on stored information, the detected facial expression with a predetermined optical distortion type; and
selecting, based on the detected optical distortion, a corresponding corrective filter for compensating for the optical distortion introduced by the facial expression.

The facial expression of the user captured in the image may also introduce an optical distortion in the corresponding biometric characteristics. As such, a facial expression detection analyser may be used to detect the facial expression of the user and associate the detected expression with an optical distortion level. Since facial expressions may alter the facial features, the expression analyser may estimate a relative optical distortion against the same facial expression with compensated facial features, e.g. a reference facial expression.

According to embodiments of the first aspect, the step of determining the biometric characteristics of the user further comprises the step of updating the corrective filter with the optical distortion information extracted from each image during the processing of the extracted biometric information. The optical distortion information may comprise any one, or a combination, of an image optical distortion value introduced in each image by a camera lens of the corresponding image capturing device, a relative optical distortion value introduced in each image in relation to images captured by different image capturing devices, and an optical distortion value introduced by a detected facial expression. For example, the corrective filter may be selected based on the image capturing device. Furthermore, the corrective filter may be updated with distortion information from the different image capturing devices, thereby enhancing the compensation of the distortion.

According to embodiments of the first aspect, the step of determining the biometric characteristics of the user further comprises:
comparing the biometric characteristics extracted from the captured biometric information with the biometric characteristics stored in a corresponding biometric ID profile of the user stored in a profile database of the biometric management system; and
determining a biometric matching score indicative of the matching accuracy between the extracted set of biometric characteristics and the reference set of biometric characteristics.

According to embodiments of the first aspect, the step of determining the biometric characteristics further comprises the step of:
determining, based on the matching score, a biometric authentication strength level of the stored biometric ID profile of the user, which biometric authentication strength level is indicative of a set of security measures and/or security checks to be performed at each security touchpoint to authenticate the user; and
if the determined biometric authentication strength level of the user biometric ID is within a predefined threshold, issuing a notification to an electronic device of a user indicating that the biometric characteristics stored in the biometric ID need to be updated.

According to embodiments of the first aspect, the step of determining the biometric authentication strength level of a biometric ID profile of a user further comprises the step of selecting, based on the determined biometric authentication strength of the biometric ID profile of the user, a biometric authentication procedure for authenticating the identity of the user at one or more security touchpoints that are communicatively coupled to the biometric management system, the biometric authentication procedure being indicative of a set of security measures and/or security checks to be performed at each security touchpoint to authenticate the identity of the user.

The present invention enables the determination of a biometric matching score indicating the matching accuracy between the biometric characteristics of the user stored in the biometric ID profile of the user, referred to as reference biometric characteristics, and biometric characteristics extracted from a verification image referred to as biometric verification characteristics. The biometric score may be used to determine the authentication strength of the user reference biometric characteristics stored in the biometric ID profile in advance of the presentation of the user at a biometric authentication touchpoint. For example, in the case of a user planning to go on a journey, the corresponding biometric matching score of the user may be determined in advance of their journey. The authentication strength, biometric matching score, and/or the biometric profile of the user may be communicated to each biometric authentication touchpoint along the user's journey, e.g. airport security touchpoints and the like. Depending on the generated biometric matching score, a number of follow-up actions may be triggered. For example, in the case that the biometric matching score is below or at a threshold range, the user may receive a notification at a software application running on an electronic user device, e.g. phone, tablet, computer, and the like. The notification may indicate that the user needs to update the biometric ID profile by following a registration process. Following the notification, a number of follow-up actions may be triggered on the software application indicating the steps to be taken to perform the registration process, e.g. the registration process may open on the user interface of the software application. The authentication strength level associated with a biometric matching score may indicate the authentication procedure to be followed at the different biometric authentication touchpoints along the user's journey and/or the likelihood that the authentication process would be successful. The authentication strength, biometric matching score, and/or the biometric profile of the user may be communicated to each biometric authentication touchpoint along the user's journey in advance of the authentication of the user. For example, the biometric management system, based on information on the user journey or a prompt by the biometric authentication touchpoints, may transmit the required information to one or more biometric authentication touchpoints. Accordingly, each touchpoint may select an appropriate authentication procedure based on the user matching score and/or authentication strength level. The severity level of the authentication procedure, which is indicative of the security checks to be performed for the user authentication, may be adapted according to the matching score and/or authentication strength of the user biometric ID profile.

According to embodiments of the first aspect, the step of updating the biometric ID profile of the user comprises assigning to the biometric ID profile of the user an expected expiration date, wherein assigning the expected expiration date is based on the determined biometric matching score and on a time drifting biometric ID profile of the user indicating an expected change of the biometric characteristics of the user over time.

According to embodiments of the first aspect, the time drifting profile of the user is generated by a trained neural network based on historical biometric information extracted from images of the user over a period of time captured by one or more image capturing devices; and
wherein the neural network is configured for updating the stored biometric ID profile of the user based on the generated time drifting biometric ID profile of the user to compensate for differences occurring in the biometric characteristics introduced over time.

Based on the biometric matching score, the present invention may further determine the expiration date of the biometric characteristics stored in the user biometric ID profile, thereby indicating a period for which the biometric ID profile of the user is valid. The expiration date may be determined by means of a time drifting profile of the user biometric characteristics generated by means of a trained neural network using as inputs historical biometric characteristics obtained from previously captured images. The time drifting profile may be associated with an ageing profile of the user and may further include other biometric information such as appearance changes. The time drifting profile may be used to update the biometric features stored in the biometric ID profile. For example, based on the time drifting profile, the neural network may update the biometric characteristics of the user, e.g. to compensate for the effect of ageing. In this way, the accuracy of the authentication procedure may be further improved.

According to embodiments of the first aspect, the biometric information is obtained from a face scan, a fingerprint scan, an iris scan, or a blood vessel such as a vein scan.

According to embodiments of the first aspect, the distortion introduced in an image obtained by an image capturing device is associated with a radial or tangential distortion introduced due to a limitation of the camera lenses of the image capturing device.

According to embodiments of the first aspect, the step of updating the biometric ID profile of a user further comprises assigning, based on the matching score being greater than a biometric matching score threshold, monetary rewards to the user, e.g. discounts, points, and the like, which can be exchanged for services or products at different distribution channels.

According to embodiments of the first aspect, a reward is awarded to the user each time an authentication procedure is successfully completed at a biometric security touchpoint.

The traveller may be further offered rewards for maintaining a high biometric matching score, thereby further enhancing the accuracy of the authentication procedure and reduce the processing required at the biometric authentication touchpoints.

According to a second aspect of the present invention, a biometric management system is provided, which comprises:
a profile database configured for storing biometric ID profiles of registered users, each comprising biometric characteristics of a user; and
a biometric processing module configured for executing the method of any one of the embodiments of the first aspect.

The present invention further offers a biometric management system for managing the biometric ID profiles of the user. The biometric management system is accessible by biometric touchpoints and users registered for a particular service. The biometric ID profile facilitates the communication and processing of biometric information from the users and/or the biometric authentication touchpoints. For example, the biometric management system may be part of a travel service configured to facilitate faster and accurate processing of registered passengers along their journey.

According to a further aspect of the present invention, a biometric security system is provided, which comprises:
a plurality of biometric authentication touchpoints, each configured to authenticate a user during a biometric authentication procedure based at least on a biometric matching score being within a corresponding target biometric matching value range, the biometric matching score being indicative of the matching accuracy between the biometric characteristics of a user contained in a stored biometric ID profile and biometric characteristics extracted from one or more images of the user; and
a biometric management system according to the second aspect of the present invention communicatively coupled to the plurality of the biometric authentication touchpoints, the biometric management system is configured, at the request of a biometric authentication touchpoint, to communicate the biometric ID profile of a registered user.

According to embodiments of the third aspect, each biometric authentication touchpoint is configured to select a biometric authentication procedure for authenticating the user based at least on the biometric matching score assigned to the corresponding biometric ID profile of the user.

The present invention further offers a biometric security system, whereby registered biometric touchpoints access the biometric information of registered users stored in the biometric management system for authentication purposes. The biometric authentication touchpoints may be added to the biometric security system based on the service provided to the user. For example, in the case of a traveller/passenger, the biometric authentication touchpoints may be added based on the biometric authentication points provided along the user's journey, e.g. airport checks, hotel checks, and the like.

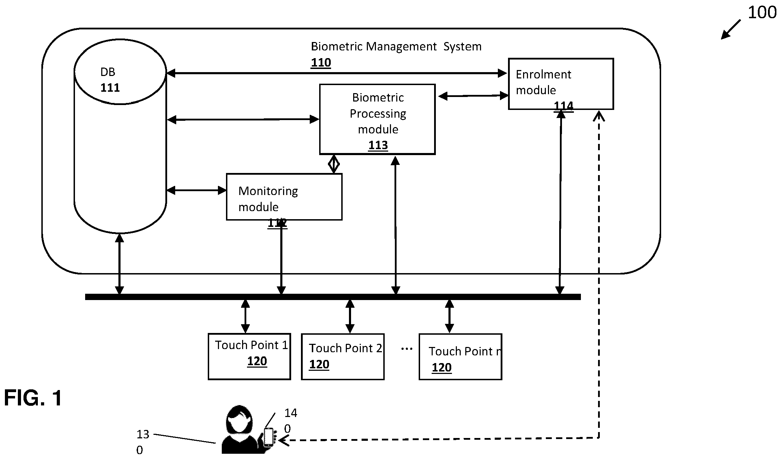

Figure 1 shows an example of a biometric security system 100 according to embodiments of the present invention. The biometric security system 100 is provided with a biometric management system 110 that is communicatively coupled via a communication network to one or more biometric authentication touchpoints 120. The biometric management system is configured to manage the biometric identities (IDs) of a plurality of registered users 130. A user 130 may register a biometric ID profile in the biometric management system 110 through an enrolment procedure that may be carried via an enrolment module 114. During the enrolment procedure, the enrolment module 114 obtains a set of biometric characteristics of a user 130 from biometric information extracted by means of biometric analyses on images taken by one or more image capturing devices. A biometric processing module 113 the extracted biometric information from each image to determine biometric characteristics associated with the user. The biometric information may be obtained from a biometric scanning device that is configured to process one or more images and convert the captured subject into floating-point feature vectors. The captured subject may be the face of the user, a fingerprint, an iris scan, and the like. The biometric processing module 113 is configured to correct any optical distortion introduced into the biometric information due to imperfections and/or limitations of the camera system, e.g. the camera lens. The optical distortion correction is performed by determining the optical distortion introduced to the biometric information by the biometric scanning device and, if the distortion level is within an optical distortion threshold range, applying a corrective filter to correct the detected optical distortion. The corrective filter may be selected based on the parameters and/or characteristics of the image capturing device and/or the optical distortion introduced in the image.

The extracted biometric characteristics are stored in a biometric identity (ID) profile of a user 130, stored in a profile database 111 of the biometric management system 110. The biometric ID profile may contain a set of registered biometric characteristics and other information for identifying the user, such as a password, name, address, and the like. For example, a user 130 may register a biometric ID profile in the biometric management system 110 by accessing a software application running on an electronic device 140, the enrolment module 114. Using the electronic device 140 or another image capturing device, one or more images of the user 130 may be obtained, e.g. face scan, fingerprint scan, voice recording, and the like. The enrolment module 114 may process the images to obtain the biometric characteristics of the user 130. Accessing the biometric management system 110 may be performed through a secure channel where user 130 is verified and authenticated. The user authentication may be performed using known solutions, such as two-factor authentication, a private key, and the like. The biometric touchpoints 120 may request access to biometric IDs of users from the biometric management system 110. For example, a biometric authentication touchpoint 120 at an airport facility may request the biometric ID profiles of a passenger due to arrive or that has arrived at the airport. As such, a pre-screening of the biometric ID profiles may be performed to determine the level of security, also referred to as authentication severity level, required to authenticate the expected passengers at the biometric authentication touchpoints. Furthermore, a pre-screening of biometric ID profiles may flag potential issues with a particular biometric ID, e.g. be part of a high-risk list, spoof attacks, and the like. The biometric management system 110 may be provided with a monitoring module 112, which is configured to monitor a range of parameters associated with the biometric ID profile. For example, the monitoring module 112 may monitor parameters selected from a group, which includes but is not limited to historical biometric authentication transactions, the severity level of each historical biometric authentication transaction, number of successful biometric authentication transactions, quality of the biometric scan obtained during enrolment, a set of extracted hard and soft biometric characteristics associated with the corresponding registered user, the type and technology of the system used to obtain the biometric scan of the registered user, the registration date of the biometric ID profile, or the time drifting profile of the user. The biometric processing module 113 is configured to assess the authentication strength of a biometric ID profile of a registered user. For example, at the request of a user 130 and/or a biometric authentication touchpoint 120, processor 113 may be configured to assess the authentication strength of a registered biometric ID profile before it is used at a biometric authentication touchpoint.

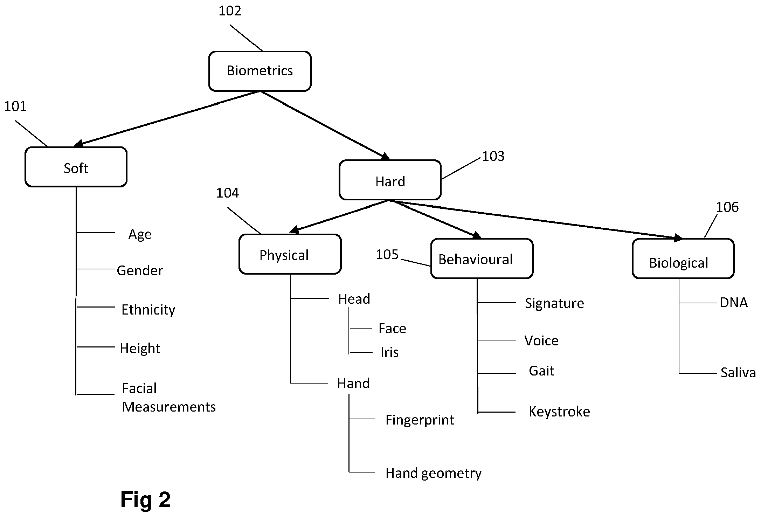

In the context of the present invention, biometric characteristics may refer to physical or behavioural human characteristics, which can be used to digitally identify a person to grant access to places, systems, devices or data. The biometric characteristics may be categorised into hard and soft biometric characteristics, as shown in figure 2. As such, biometric characteristics may include, but not be limited to, age; gender; ethnicity; height; facial measurements and geometry; scars or marks; physical characteristics such as the face, iris, fingerprint, hand geometry, vein pattern; behavioural such as signature, keystroke, voice, gait, and the like; or biological such as DNA, bio-signals - e.g. bioelectrical signals such as the electrocardiogram (ECG) and the electroencephalogram (EEG) - MRI images or X-Ray images. The biometric characteristics may be used in combination to ensure greater accuracy of identification.

In the context of the present invention, a biometric scan may refer to any means for detecting and extracting biometric information associated with a user from one or more images. For example, a biometric scan may be performed on images, recordings, data - e.g. DNA data, electrical signals - e.g. EEG, spectral data obtained from a spectral sensor, and the like.

In the context of the present invention, an image capturing device may be any device capable of obtaining an image of a subject. Such devices may include, but not be limited to, cameras, voice recorders, fingerprint readers, iris scanners, vein scanners, gait assessment devices, sensors, spectral imaging devices, wearable sensors, handwriting detection devices, typing detection devices for keystroke recognition, and the like.

In the context of the present invention, a biometric authentication touchpoint 120 may be any device capable of authenticating a user 120 based on at least one biometric characteristic. Biometric authentication touchpoints 120 may verify the identity of a user at least based on biometric characteristics of a user. For example, the biometric authentication touchpoint 120 may verify the user's identity based on a biometric matching accuracy obtained from a comparison between a registered biometric ID associated with the user 130 and a biometric scan of the user obtained from a scanning device. The biometric authentication touchpoint 120, following a successful authentication of the user identity, may allow access to the user to a secure area and/or provide goods and services. The biometric authentication touchpoint may include but not be limited to a security checkpoint, border control, point of sale, point of access, point of recognition, and the like. In accordance with embodiments of the present invention, the term biometric authentication touchpoint may be considered as any device and or group of devices capable of authenticating a user, based at least on biometric information of the user obtained from a face scan or a fingerprint scan, or an iris scan, or a voice recording, or a vein scan, and the like.

In the context of the present invention, a biometric authentication procedure indicates the security procedures and checks that may be applied at a biometric authentication touchpoint 120 to authenticate, verify, and identify users. The type of procedures and/or checks performed at a biometric authentication touchpoint 120 may vary depending on the biometric matching accuracy between the registered ID and the captured biometric scan of the user. Each biometric authentication touchpoint 120 may require a target biometric matching accuracy to successfully authenticate the identity of a user 130. The biometric authentication touchpoints 120 may initiate additional authentication procedures and security checks to authenticate a user 130. For example, a biometric ID with high matching accuracy, e.g. the biometric accuracy is within a preferred range, may authenticate user 130 via an automatic biometric authentication procedure, e.g. automated border control electronic gate. On the contrary, if the biometric matching accuracy is below a predetermined target value, additional security checks and procedures may be initiated at the biometric authentication checkpoint, such as agent verification requiring other identity forms to identify the user 130. For example, at an airport, a traveller having a registered biometric ID with a low biometric matching accuracy, following a false negative biometric matching at an electronic gate, may be directed to a passport control area where additional identity checks may be carried out. The additional security checks may result in extra delays, extra resources for the airport security, and the non-identification of the user 130.

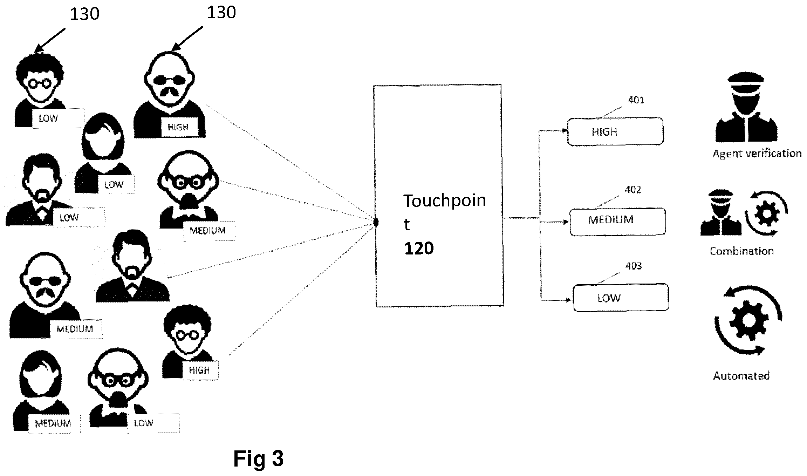

In the context of the present invention, the authentication severity level, also referred to as security level, of an authentication procedure of a biometric authentication touchpoint 120 indicates the additional security checks to be performed for authenticating a registered user 114. The severity level of the authentication procedure at a biometric authentication touchpoint 120 may depend on the biometric ID's security strength, which indicates the expected biometric matching accuracy of the biometric ID at a biometric authentication touchpoint 120. The severity of an authentication procedure may be expressed as a value, a range, or a level, e.g. high, low, medium. Figure 3 shows an example of the severity level of an authentication procedure at a biometric authentication touchpoint 120. The registered users 130 may be subjected according to their biometric matching value to different biometric authentication procedures. For example, users 130 with a biometric matching value associated with a low severity may be directed to an automated biometric authentication procedure, e.g. electronic gate.

Similarly, users 130 associated with a medium level of severity may be subjected to a more rigorous authentication procedure that may involve a semi-automatic authentication procedure. E.g. an agent may also be present at an electronic gate to check the passport. However, users 130 associated with a high severity level may be subjected to an authentication procedure that involves extra security checks: e.g. may involve an agent, such as a police officer, performing a number of security checks that may go beyond checking the biometric ID. The extra security checks may involve, but not be limited to, the presentation of documents that prove the identity of the user 130, cross-checking the identity of a user across different departments, and the like.

In the context of the present invention, the different levels of authentication severity for an authentication procedure: high, medium, and low, may be associated with the type and number of security checks expected to be performed at a biometric authentication touchpoint during an authentication procedure. For example, a low severity level may indicate that it is likely that the authentication procedure would be automatic, e.g. using an electronic gate. A medium-level may indicate that an agent may be present during the automatic authentication. A high severity level may indicate that an agent would perform the authentication and that further identification means may be necessary. Severity may be determined based on a linear or weighted linear combination, direct or inverse, of the biometric matching value assigned to a registered user's biometric ID.

In the context of the present invention, the biometric matching score of a biometric ID profile, also referred to as a biometric score, may indicate the security strength of a biometric ID. The security strength of a biometric ID is related to the probability that the biometric ID is correctly matched with the biometric characteristics of the user captured at biometric authentication touchpoint 120. The security strength and/or the biometric matching value may be expressed as a value, a range, or a level, e.g. high, low, medium.

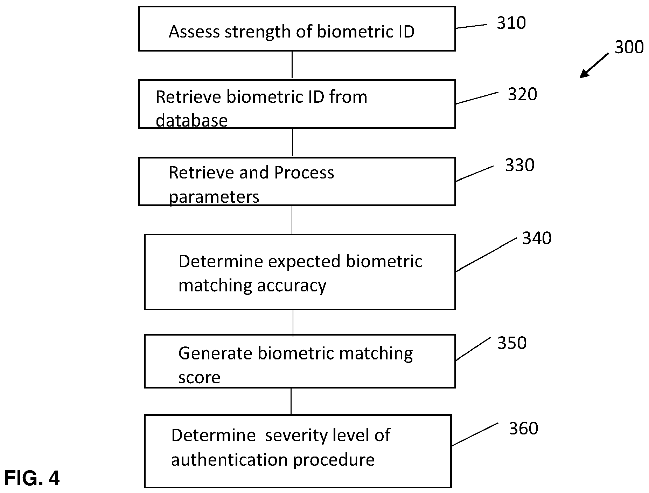

Figure 4 shows an exemplified method 300 for assessing the authentication strength of a biometric ID profile at the biometric processing module 113. Processor 113 may receive at step 310 a request to assess the authentication strength of a biometric ID profile of a registered user 130. For example, a traveller may access the biometric management system 110 to assess the security strength of a linked registered biometric ID in advance of presenting the biometric ID at a set of selected biometric authentication touchpoints associated with his/her journey, e.g. airports, hotels, car rental, and the like. The biometric authentication touchpoints 120 may be selected by the user 130 and/or selected based on an event. For example, the biometric authentication touchpoints 120 may be selected from a travel itinerary of the user containing several biometric authentication touchpoints such as airport security, hotels, and the like.

Similarly, the biometric authentication touchpoints 120 may directly request an assessment of the security strength of registered users' biometric ID profiles. For example, the biometric authentication touchpoints may be configured to receive the biometric matching score and/or the corresponding biometric ID profiles of registered users in advance of their arrival at the biometric authentication touchpoints 120. At step 320, the processing module 113 may retrieve from the database 111 the requested biometric ID or IDs and accordingly retrieve and process at step 330 associated parameters from the monitoring module 112. The parameters that may be monitored by the monitoring module 112 may include but are not limited to historical biometric authentication transactions, the severity level of each historical biometric authentication transaction, the number of successful biometric authentication transactions, quality of the biometric scan obtained during enrolment, a set of extracted hard and soft biometric characteristics associated with the corresponding registered user, the type and technology of the system used to obtain the biometric scan of the registered user, the registration date of the biometric ID. The monitored parameters may be the same for all the biometric IDs or vary depending on the biometric ID profile of the user. For example, the parameters to be monitored may vary depending on the consent provided by the user. The processing module 113 may determine at step 340, based on the values of the monitored parameters, a biometric matching score for the requested biometric ID. For example, processing module 113 may place a weight on each of the monitored parameters. Accordingly, the processing module 113 may determine the expected biometric matching accuracy of the registered biometric ID based on a linear or weighted linear combination, direct or inverse, of monitored parameters. The biometric processing module 113 may then compare at step 350 the biometric matching score of the requested biometric ID profile with a target biometric matching score for each of the selected biometric authentication touchpoints 120. Based on the results of the comparison, the biometric processing module 113 at step 360 may determine an authentication strength level of the biometric ID profile indicating the security severity level of the biometric authentication procedure to be executed at each of the selected set of biometric authentication touchpoints to authenticate the registered user. The information related to the biometric score and the severity level may be displayed on a graphic user interface (GUI) of a software application running on an electronic device of the user 130. The biometric processing module 113 may be configured to periodically check the biometric matching score of registered biometric IDs and notify the corresponding users 130 at their electronic device. The biometric processing module 113 may be configured to notify users 130 when the biometric score of their biometric ID profile reaches or is below a predetermined threshold. The biometric processing module 113 may issue a notification to the user 130 to update their biometric ID profile, for example, through the enrolment module 114. Furthermore, the biometric IDs and/or the biometric score of registered users 130 may be communicated to the biometric authentication touchpoints 120. Accordingly, the biometric authentication touchpoints 120 may adapt the severity level of their authentication procedure based on the biometric scores received.

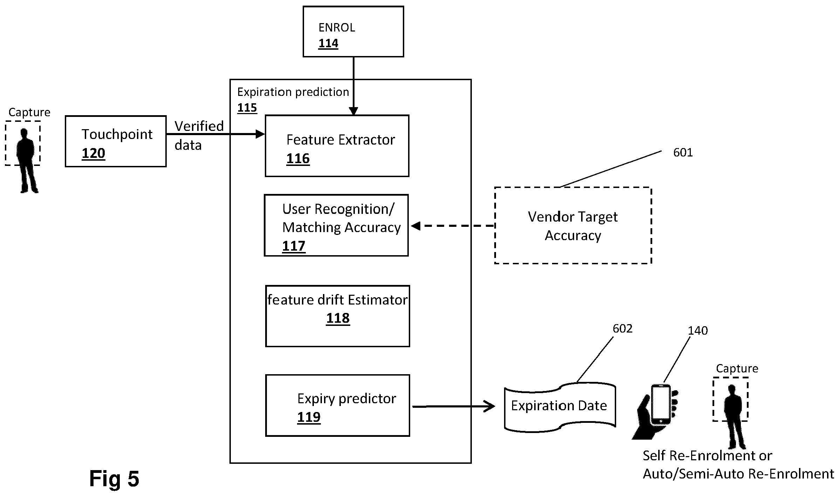

The biometric management system 110 may be configured to determine an expiry date for each of the registered biometric IDs and their corresponding biometric matching value. Figure 5 shows an example of an expiration prediction module 115 configured to determine an expiration date for the corresponding biometric ID. The expiration prediction module 115 may comprise a feature extraction module 116, which is configured to extract the biometric characteristics of a user 130 from at least one biometric scan obtained by the enrolment module 114 during the enrolment phase. For example, the user may use their electronic device to transfer the corresponding biometric ID to the expiration prediction module 115. Furthermore, the feature extraction module 116 may extract biometric characteristics of the user from images captured at a biometric touchpoint 120. Once the biometric feature extraction has been performed, the corresponding biometric characteristics are compared at a user recognition module 117 to determine a biometric matching accuracy. Based on the biometric matching accuracy, a biometric score is generated by the user recognition module 117. The biometric matching accuracy may be compared to a target biometric matching accuracy of a selected biometric authentication touchpoint, e.g. an airport security touchpoint. If the biometric matching accuracy obtained is below the target biometric accuracy of the selected vendor, a notification may be sent to the user to obtain a new biometric scan and/or update the biometric ID. If the biometric accuracy is acceptable, the extracted biometric characteristics are fed to a biometric feature drift estimator 118 configured to determine the evolution of the biometric characteristics of the user over time and accordingly generate a time drifting profile of the user. Based on the time-drifting model generated, the expiration of the biometric ID and corresponding biometric score may be determined by an expiry predictor module 119. The expiry predictor module 119 may compare the registered biometric ID of a user with biometric characteristics generated using the time drifting profile at different moments in time. For example, the registered biometric ID may be compared with a series of time-drifted biometric profiles of the user over time, whereby each time drifted biometric profile in the series indicates a change in the biometric characteristics of the user at a specific moment in the future. For each comparison between the registered biometric ID profile and a time-drifted biometric ID profile, a biometric matching score is generated, compared to the biometric matching requirements of the registered touchpoints. It is expected that the generated biometric matching score would drift over time and that, at some point, it would fall below the biometric matching score requirements of the registered biometric authentication touchpoints. As such, the expiration predictor module 119 may calculate a date for updating the biometric ID profile of the user. The expiration date is communicated to user 130 and monitored by the processing module 113. Updating the biometric ID may be performed through a reenrolment procedure where user 130 may submit a biometric scan to the enrolment module 114 of the biometric management system 110.

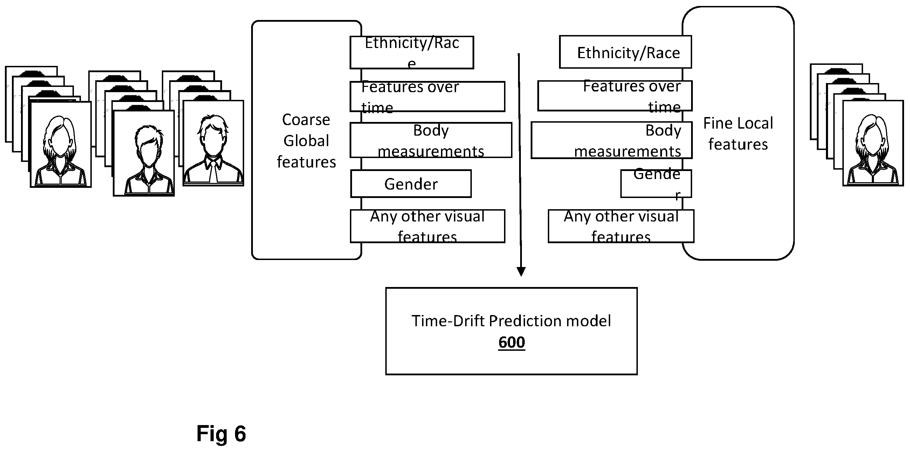

As shown in figure 6, the time drift model of a registered user may be generated based on a set of coarse global biometric features and a set of fine local biometric characteristics, which may be fed into a deep neural network, e.g. a coarse-fine deep convolution neural network, a recurrent network, and the like. The global coarse feature may be collected from different users sharing similarities with a registered user, e.g. race/ethnicity, height, gender, and other hard and soft biometric characteristics. The local fine biometric characteristics may be obtained from biometric scans of the user obtained at different points in time. Similarly to the global, coarse characteristics, the fine, local characteristics may include one more of hard and/or soft biometric characteristics. This serves to predict how the facial or other characteristics of the user will "drift" over time.

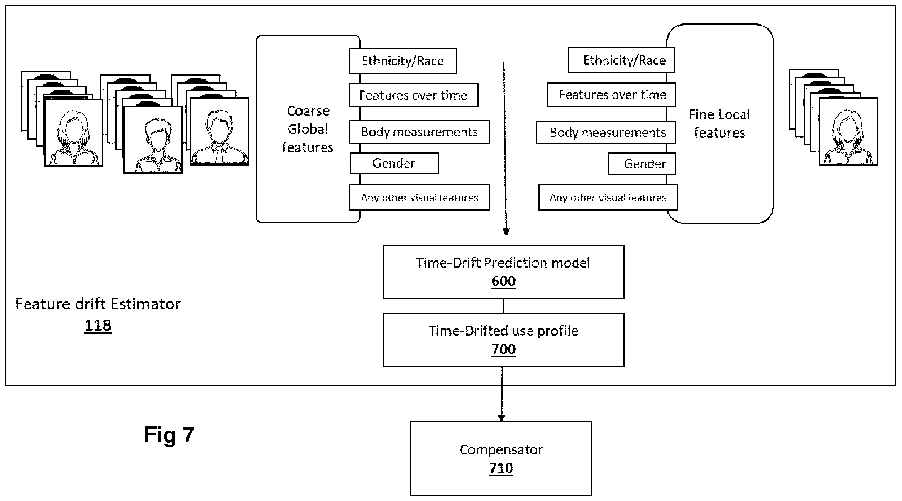

Based on the time drifting model, a time drifting profile may be generated for the registered user 130. The biometric management system may comprise a compensation module configured to update, based on the time drifting profile, the registered biometric ID of the user, as shown in figure 7. As such, the biometric ID of a user 130 may be updated to reflect the evolution of the biometric characteristics of the user and accordingly, the corresponding biometric score may be improved. Over time, it may be required to obtain new biometric scans of user 130 so that changes in the biometric characteristics may be more accurately reflected.

According to an embodiment, the authentication, verification, and identification of the user may be performed by the biometric management system 110. A biometric scan obtained at a biometric authentication touchpoint may be compared using the biometric processing module 113 to the registered biometric ID to determine a match. The biometric ID profile may be updated based on the time-drifting profile to improve the biometric accuracy with the real-time biometric scan obtained at the biometric authentication touchpoint. Similarly, using the time-drifting model, a comparison may be made between the current biometric ID profile of the user and a corresponding time-drifted profile to determine the authentication strength level of the current biometric ID profile. As such, the biometric ID profile of a user may be assessed periodically for a number of parameters such as biometric score, authentication strength, the severity of the authentication procedure, and the like.

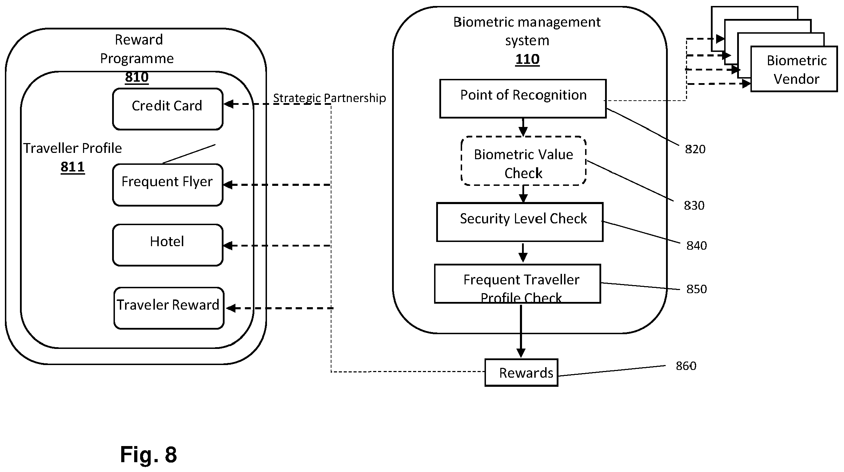

The database management system 110 may be communicatively coupled to a traveller profile associated with a reward programme, as shown in figure 8. For example, the biometric management system 110 may be configured to assign reward points to registered users based on the performance of their corresponding biometric IDs. For example, the biometric management system 110 may receive information on the authentication success rate of a traveller biometric ID profile 811 at a biometric touchpoint 810, which is similar to the touchpoints 120 of figure 1. The biometric management system 110, based on a number of criteria such as biometric matching score and/or authentication strength, may determine reward points for the traveller. The reward points may be added to the traveller biometric ID profile and may be exchanged for goods and services, e.g. flights, hotels, and the like.

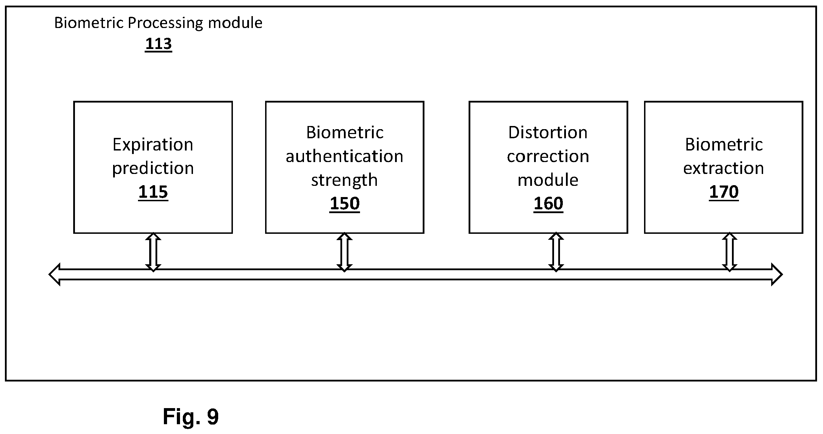

Figure 9 shows an exemplified implementation of the biometric processing module 113 according to embodiments of the present invention. As shown, the biometric processing module 113 may be provided with the expiration prediction module 115, the biometric authentication strength module 150, which is configured for determining the authentication strength of a biometric ID profile as described previously, a distortion correction module 160, which is configured for correcting the distortion introduced by the image capturing device as previously described, and a biometric extraction module 170 for extracting the biometric characteristics of the user as previously described. For example, the distortion correction module 160 may be configured for correcting the radial and tangential distortion introduced in the camera lens of the image capturing device.

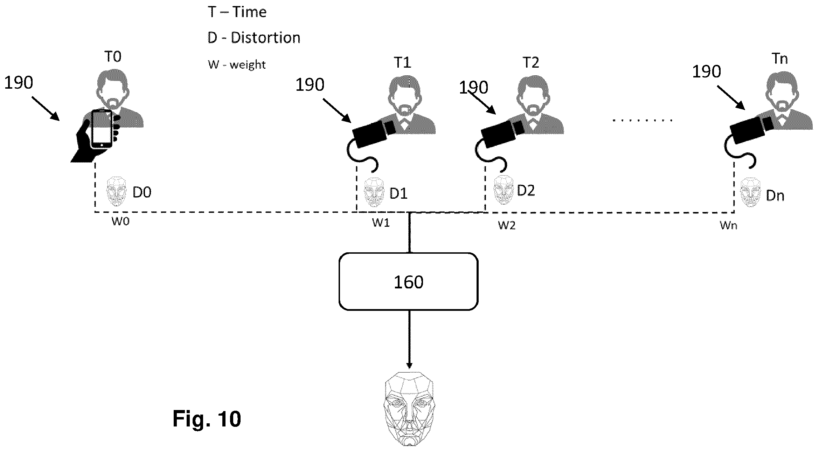

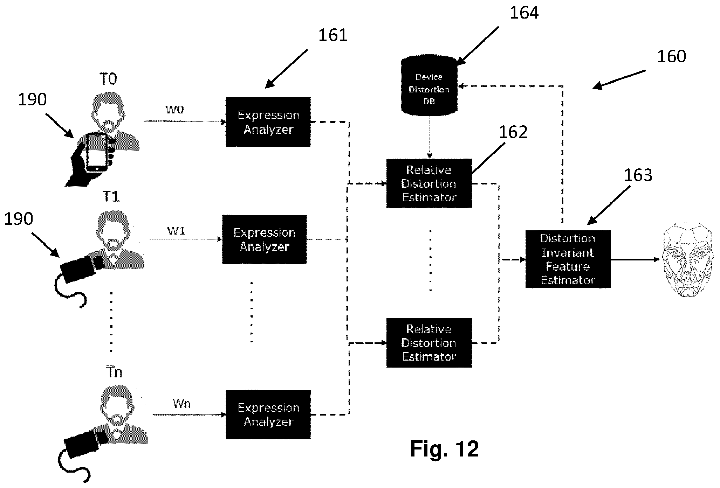

Figures 10 to 14 show an example of the operation of the distortion correction module for processing a face scan of the user according to embodiments of the present invention. As shown, one or more images of the user obtained by different image capturing devices 190 are processed to determine the distortion introduced by the corresponding image capturing devices 190. The image capturing devices 190 may be any device capable for capturing an image e.g. a user electronic device 140, a camera of a touchpoint 120, and the like. The distortion correction module 160 is configured for receiving and processing each image to compensate for the distortion introduced. For example, a corrective filter may be selected and applied to the images to compensate for the distortion introduced by each image capturing device 190. The corrective filter may be selected according to the image capturing device 190 used to capture the image of the user. The corrective filter may be a generic corrective filter continuously updated with distortion information from the image capturing devices 190. Once the distortion in the image is corrected, the image may be processed by the biometric extraction module 170 to extract the user's biometric characteristics, which may be stored in the user's biometric ID profile.

The distortion correction module 160 is configured for determining the relative distortion introduced by the image capturing device 190. The relative distortion may be determined by comparing an image of the user obtained from a preferred image capturing device 190, e.g. a selfie taken with the user's phone, with an undistorted reference image. A relative distortion analyser may be provided to analyse the differences between the two images and estimate the relative distortion introduced by the image capturing device 190, which is subsequently compensated during image warping to generate a corrected version of the image taken by the user using an electronic device, e.g. a phone.

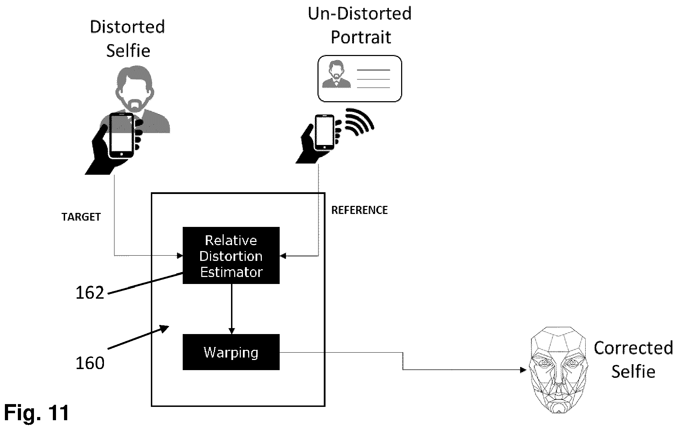

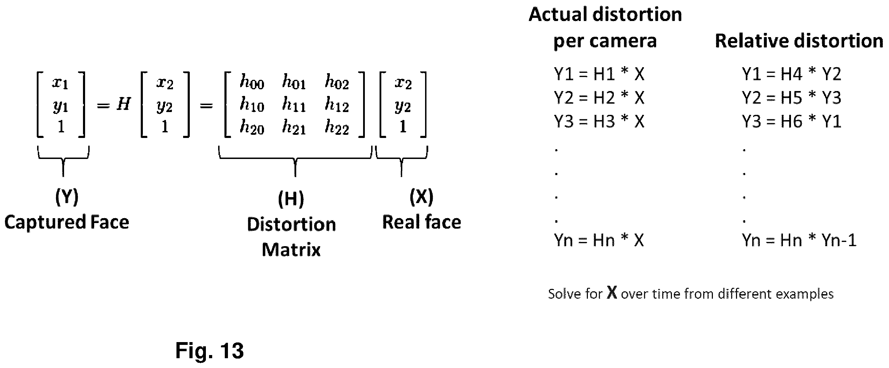

The distortion correction module 160 may further comprise an expression analyser 161 configured to analyse the captured image to determine the user's facial expression. It is known that facial expressions introduce further distortions in the biometric features. The expression analyser 161 detects the distortion introduced into the image by the facial expression of the user, e.g. by comparing the captured facial expression with a reference compensated facial expression following the example shown in figure 11. In the case of multiple images obtained from different image capturing devices 190 belonging or not to a biometric authentication touchpoint, after determining the distortion introduced by the facial expression, the relative distortion between two image capturing devices 190 is calculated by a relative distortion estimator 162, similarly to that shown in figure 11. A distortion invariant estimator 163 is provided for calculating the relative distortion introduced in the images from all the image capturing devices 190, and the relative distortion information obtained is fed to a database 164. The relative distortion information may update the corrective filter for compensating for the detected distortion in an image. Having compensated for the distortion introduced by the different image capturing device 190, the resulting biometric characteristics may be considered as being distortion invariant. Figure 13 shows the parameters used for calculating the relative distortion between images. As such, during an authentication procedure, the images obtained from the biometric touchpoints 120 may be processed to remove the distortion before the extracted biometric characteristics of the user is processed and compared to a reference undistorted biometric profile of the user. Similarly, the biometric profile of the user may be updated with the corrected biometric characteristics of the user. In this way, the accuracy of the authentication procedure is improved.

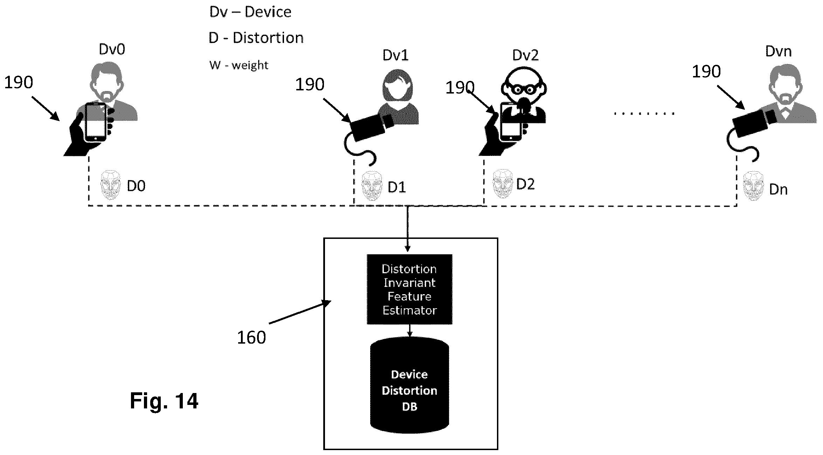

The optical distortion may be further compensated based on information obtained from images of different users captured by different image capturing devices 190, as shown in figure 14. In general, the distortion information for each image capturing device 190 may be collected and stored in database 164 for further use in the compensation of optical distortion detected in captured images. For example, the optical distortion information may be used to update the parameters of a corrective filter e.g. each time a new optical distortion information is collected from different image capturing devices. In general, as more images are processed, more information on optical distortion is generated, thereby allowing accurate detection and compensation of the optical distortion introduced by the different types of image capturing devices.

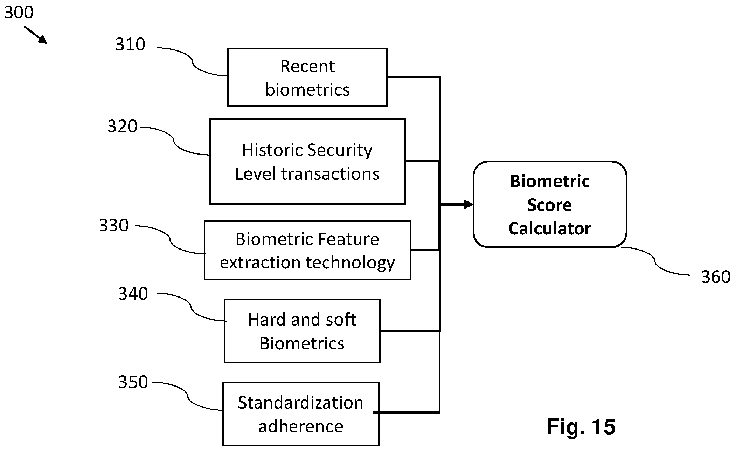

In general, as has been previously described, different parameters may be taken into account for calculating the biometric score of a user profile according to embodiments of the present invention. Figure 15 shows an exemplified system 300 for generating the biometric score of a user profile at a biometric score calculator engine 360 of the biometric management system 110. The biometric score calculator engine 360, and with reference to the embodiments discussed earlier, may perform the biometric score calculation based on information collected from any one of, or combination of, at least the following sources:
- Recent biometric information 310, which may be collected from a recent image of the user e.g. taken via an imagining capturing apparatuses of an electronic device using a specified software application. As previously explained, the biometric characteristics stored in a user profile may be assigned a validity time frame, which may be used by the biometric score calculator 360, in combination with other information, to generate the biometric score of the user profile.
- Historic Security Level transactions 320, which may be collected by security touchpoints that are communicatively coupled to the biometric management system as shown in Figure 1.
- Feature extraction technology 330 information, which may be collected from the feature extraction module 116 of the biometric and relate to at least the technology used by the image capturing device to capture the image of the user e.g. camera lenses, image processing software, and the like. As previously discussed, the image capture capabilities and processing of the image capturing device play an important role in the optical distortion introduced in the image capturing device. The biometric score calculator 360 may take into account the biometric feature extraction capabilities of the image capturing device and further consider the corrective filter capabilities in the generation of the biometric score.
- Hard and soft Biometric information 340 collected from the capture images and/or other information stored in the user profile, as previously described. The biometric score calculator 360 may assign a weighting factor to the parameters of the distortion, which may be used, in addition to other information, to generate the biometric score.
- Standardization adherence module 350, relates to the standardization of the biometric information obtained from the captured images. As previously discussed, the captured images may be distorted due to a number of factors such as the image capturing technology, facial expression of the user, position of the camera, and the like. As such, the standardisation adherence module 350 may standardise the captured images according to a predetermined standard e.g. via the use of a corrective filter.

In general, the routines executed to implement the embodiments of the invention, whether implemented as part of an operating system or a specific application, component, program, object, module or sequence of instructions, or even a subset thereof, may be referred to herein as "computer program code," or simply "program code." Program code typically comprises computer-readable instructions that are resident at various times in various memory and storage devices in the computer and that, when read and executed by one or more processors in a computer, cause that computer to perform the operations necessary to execute operations and/or elements embodying the various aspects of the embodiments of the invention. The computer-readable program instructions for carrying out operations of the embodiments of the invention may be, for example, assembly language or either source code or object code is written in any combination of one or more programming languages.

The program code embodied in any of the applications/modules described herein is capable of being individually or collectively distributed as a program product in a variety of different forms. In particular, the program code may be distributed using the computer-readable storage medium, having the computer-readable program instructions thereon for causing a processor to carry out aspects of the embodiments of the invention. Computer-readable storage media, which is inherently non-transitory, may include volatile and non-volatile, and removable and non-removable tangible media implemented in any method or technology for storage of information, such as computer-readable instructions, data structures, program modules, or other data. Computer-readable storage media may further include RAM, ROM, erasable programmable read-only memory (EPROM), electrically erasable programmable read-only memory (EEPROM), flash memory or other robust state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer. A computer-readable storage medium should not be construed as transitory signals per se (e.g., radio waves or other propagating electromagnetic waves, electromagnetic waves propagating through a transmission media such as a waveguide, or electrical signals transmitted through a wire). Computer-readable program instructions may be downloaded to a computer, another type of programmable data processing apparatus, or another device from a computer-readable storage medium or an external computer or external storage device via a network. Computer-readable program instructions stored in a computer-readable medium may be used to direct a computer, other types of programmable data processing apparatus, or other devices to function in a particular manner, such that the instructions stored in the computer-readable medium produce an article of manufacture including instructions that implement the functions/acts specified in the flowcharts, sequence diagrams, and/or block diagrams. The computer program instructions may be provided to one or more processors of a general-purpose computer, special purpose computer, or other programmable data processing apparatus to produce a machine, such that the instructions, which execute via the one or more processors, cause a series of computations to be performed to implement the functions and/or acts specified in the flowcharts, sequence diagrams, and/or block diagrams.

In certain alternative embodiments, the functions and/or acts specified in the flowcharts, sequence diagrams, and/or block diagrams may be re-ordered, processed serially, and/or processed concurrently without departing from the scope of the invention. Moreover, any of the flowcharts, sequence diagrams, and/or block diagrams may include more or fewer blocks than those illustrated consistent with embodiments of the invention.

The terminology used herein is for the purpose of describing particular embodiments only and is not intended to be limiting of the embodiments of the invention. As used herein, the singular forms "a", "an" and "the" are intended to include the plural forms as well, unless the context indicates otherwise. It will be further understood that the terms "comprise" and/or "comprising," when used in this specification, specify the presence of stated characteristics, integers, steps, operations, elements, and/or components, but do not preclude the presence or addition of one or more other characteristics, integers, steps, operations, elements, components, and/or groups thereof. Furthermore, to the extent that the terms "includes", "having", "has", "with", "comprised of", or variants thereof are used in either the detailed description or the claims, such terms are intended to be inclusive in a manner similar to the term "comprising".
While a description of various embodiments has illustrated all of the inventions and while these embodiments have been described in considerable detail, it is not the intention of the Applicants to restrict or in any way limit the scope of the appended claims to such detail. Additional advantages and modifications will readily appear to those skilled in the art. The invention in its broader aspects is therefore not limited to the specific details, representative apparatus and method, and illustrative examples shown and described. Accordingly, departures may be made from such details without departing from the spirit or scope of the Applicants general inventive concept.

## Claims

1. A method for extracting, at a biometric management system, biometric characteristics of a user from one or more images, the method comprising:
acquiring at least one image of a user captured by an image capturing device;
extracting (170) biometric information associated with the user from the at least one captured image; and
processing the extracted biometric information to determine biometric characteristics of the user, wherein the step of determining the biometric characteristics of the user comprises:
determining a relative optical distortion introduced in the biometric information extracted from each image by the corresponding image capturing device;
if an optical distortion is detected, applying (160) a corrective filter to the extracted biometric information to compensate for the detected optical distortion, wherein the corrective filter is selected from a communicatively coupled filter database based on optical distortion information extracted from each image during the processing of the extracted biometric information; and
extracting the biometric characteristics of the user from the compensated biometric information, or if an optical distortion is not detected, from the extracted biometric information.

2. The method of claim 1, wherein determining the relative optical distortion comprises comparing the at least one image with stored images captured from different image capturing devices.

3. The method of any one of claims 1 or 2, wherein determining the relative optical distortion comprises comparing the extracted biometric information from each captured image with a reference set of undistorted biometric information associated with the user stored in a biometric ID profile of the user obtained from a profile database of the biometric management system.

4. The method of any one of claims 2 or 3, wherein the relative optical distortion is determined based on a comparison of stored images of the user captured at different points in time.

5. The method of any one of the preceding claims, wherein determining the optical distortion comprises:
identifying a facial expression of the user in each image;
associating, based on stored information, the detected facial expression with a predetermined optical distortion type; and
selecting, based on the detected optical distortion, a corresponding corrective filter for compensating for the optical distortion introduced by the facial expression.

6. The method of any one of the preceding claims, wherein the optical distortion information comprises any one, or a combination, of an image optical distortion value introduced in each image by a camera lens of the corresponding image capturing device, a relative optical distortion value introduced in each image in relation to images captured by different image capturing devices, and an optical distortion value introduced by a detected facial expression.

7. The method of any one of the preceding claims, wherein the step of determining the biometric characteristics of the user further comprises the step of updating the corrective filter with the optical distortion information extracted from each image during the processing of the extracted biometric information.

8. The method of any one of the preceding claims, wherein the step of determining the biometric characteristics of the user further comprises:
comparing the biometric characteristics extracted from the captured biometric information with the biometric characteristics stored in a corresponding biometric ID profile of the user stored in a profile database of the biometric management system; and
determining a biometric matching score indicative of the matching accuracy between the extracted set of biometric characteristics and the reference set of biometric characteristics.

9. The method of claim 8, wherein the step of determining the biometric characteristics further comprises the step of:
determining, based on the matching score, a biometric authentication strength level of the stored biometric ID profile of the user, which biometric authentication strength level is indicative of a set of security measures and/or security checks to be performed at each security touchpoint to authenticate the user; and
if the determined biometric authentication strength level of the user biometric ID is within a predefined threshold, issuing a notification to an electronic device of a user indicating that the biometric characteristics stored in the biometric ID need to be updated.

10. The method of claims 9, wherein the step of determining the biometric authentication strength level of a biometric ID profile of a user further comprises the step of selecting, based on the determined biometric authentication strength of the biometric ID profile of the user, a biometric authentication procedure for authenticating the identity of the user at one or more security touchpoints that are communicatively coupled to the biometric management system, the biometric authentication procedure being indicative of a set of security measures and/or security checks to be performed at each security touchpoint to authenticate the identity of the user.

11. The method of any one of claims 8 to 10, wherein the step of updating the biometric ID profile of the user comprises assigning to the biometric ID profile of the user an expected expiration date,
wherein assigning the expected expiration date is based on the determined biometric matching score and on a time drifting biometric ID profile of the user indicating an expected change of the biometric characteristics of the user over time.

12. The method of claim 11, wherein the time drifting profile of the user is generated by a trained neural network based on historical biometric information extracted from images of the user over a period of time captured by one or more image capturing devices; and
wherein the neural network is configured for updating the stored biometric ID profile of the user based on the generated time drifting biometric ID profile of the user to compensate for differences occurring in the biometric characteristics introduced over time.

13. The method of any one of the preceding claims, wherein the biometric information is obtained from a face scan, a fingerprint scan, an iris scan, or a vein scan.

14. A biometric management system (110) comprising:
a profile database (111) configured for storing biometric ID profiles of registered users, each comprising biometric characteristics of a user; and
a biometric processing module (113) configured for executing the method of any one of claims 1 to 13.

15. A biometric security system (100) comprising:
a plurality of biometric authentication touchpoints (120), each configured to authenticate a user (130) during a biometric authentication procedure based at least on a biometric matching score being within a corresponding target biometric matching value range, the biometric matching score being indicative of the matching accuracy between the biometric characteristics of a user contained in a stored biometric ID profile and biometric characteristics extracted from one or more images of the user; and
a biometric management system (110) according to claim 14 communicatively coupled to the plurality of the biometric authentication touchpoints, the biometric management system being configured, at the request of a biometric authentication touchpoint, to communicate the biometric ID profile of a registered user,
wherein each biometric authentication touchpoint is configured to select a biometric authentication procedure for authenticating the user based at least on the biometric matching score assigned to the corresponding biometric ID profile of the user.
